Europäisches Patentamt

European Patent Office

Office européen des brevets

(11) Numéro de publication: **0 057 133**
**A1**

## (12) DEMANDE DE BREVET EUROPEEN

(21) Numéro de dépôt: **82400104.4**

(22) Date de dépôt: **20.01.82**

(51) Int. Cl.³: **B 65 G 51/32**
**B 65 G 51/34**

(30) Priorité: **28.01.81 FR 8101556**

(43) Date de publication de la demande:
**04.08.82 Bulletin 82/31**

(84) Etats contractants désignés:
**AT BE CH DE GB IT LI LU NL SE**

(71) Demandeur: **FLUIDELEC Société dite:**
**Rue Henri Farman**
**F-78530 Buc, Z.I.(FR)**

(72) Inventeur: **Douard, Pierre René**
**37, Rue A. Bollard Voisin les Bretonneux**
**F-78190 Trappes(FR)**

(74) Mandataire: **Flechner, Willy et al,**
**CABINET FLECHNER 22, Avenue de Friedland**
**F-75008 Paris(FR)**

(54) Appareil pneumatique de stockage et de déstockage automatiques de cartouches destinées à contenir des objets divers.

(57) Appareil de stockage et de destockage automatiques d'objets divers, par exemple de numéraires permettant un transfert de fonds entre un poste d'entrée/sortie et une chambre de stockage (2) par l'intermédiaire de cartouches mobiles (5) circulant, sous l'action d'une pression ou d'une dépression fournie par une soufflante, dans un système tubulaire (4) relié à des colonnes de stockage (6); les colonnes de stockage sont fixes et sont réparties uniformément sur le pourtour d'une chambre cylindrique de distribution (2) alimentant en pression ou dépression le système tubulaire (4) à partir du groupe propulseur.

./...

Croydon Printing Company Ltd.

FIG.1

Appareil pneumatique de stockage et de destockage
automatiques de cartouches destinées à contenir des
objets divers.

L'invention concerne un appareil pneumatique de stockage et de destockage automatiques de cartouches destinées à contenir des objets divers, par exemple des numéraires, et permettant un transfert des cartouches entre un poste d'entrée/sortie et une chambre de stockage, sous l'action d'une alimentation en pression ou dépression fournie par un groupe propulseur, dans un système tubulaire relié à des colonnes de stockage.

On connaît déjà des installations pneumatiques de ce genre, notamment dans le domaine de la banque, pour le transport, le stockage et le destockage automatiques - en toute sécurité - de numéraires à partir d'un poste d'opération, situé par exemple près du caissier, jusqu'à une chambre forte où les fonds sont contrôlés et entreposés.

Dans un premier type d'installations, les transferts sont réalisés au moyen d'un système tubulaire comprenant un tube aller et un tube retour distincts disposés entre le poste du caissier et la salle des coffres, dans laquelle des cartouches contenant le numéraire et circulant sous commande pneumatique sont stockées dans des ensembles de colonnes de stockage verticales disposées dans un plan. Ces dernières sont disposées entre le tube aller et le tube retour en étant raccordées à ceux-ci par des systèmes compliqués d'aiguillage aval et amont exécutant un triage des différentes cartouches en association aux différentes colonnes pour des numéraires différents. De plus, il est prévu, à l'arrivée du tube aller, un générateur de dépression pour entraîner les cartouches du poste du caissier aux colonnes de stockage, et au départ du tube retour ou départ, un générateur de pression permettant de refouler une cartouche du dispositif de stockage en direction du poste du caissier. L'inconvénient de ce type d'installations est d'être extrêmement encombrant d'une part en hauteur, par suite de la présence des divers composants superposés (générateurs de pression et de dépression, colonnes de stockage, systèmes d'aiguillage), et d'autre part en largeur dès que l'on veut installer des ensembles trop importants de colonnes de stockage et, en outre, l'espace nécessaire pour les deux tubes de transfert aller et retour est très important. Les utilisateurs éventuels de telles installations, et notamment les banques, ne possèdent pas ou ne veulent pas employer des locaux de dimensions trop importantes pour de multiples raisons.

On connaît par ailleurs un autre type d'installations utilisant un système tubulaire formé d'un seul tube servant au transfert des cartouches de numéraires et dans lequel les cartouches sont stockées dans des colonnes verticales contenant, par exemple, cinq alvéoles de stockage, à chacune desquelles est associé un petit groupe propulseur centrifuge et un clapet anti-retour commandant l'envoi des cartouches du dispositif de stockage vers le poste du caissier. Il est en outre prévu un groupe propulseur supplémentaire monté en opposition par rapport aux autres groupes propulseurs et servant à l'entraînement des cartouches depuis le poste du caissier jusqu'à la colonne de stockage, ainsi qu'un clapet anti-retour associé, un tube supplémentaire étant en outre nécessaire pour compléter le circuit pneumatique en reliant tous les groupes propulseurs à une prise d'air libre par l'intermédiaire d'une triple vanne commandée. Indépendamment des vibrations sensibles provoquées par les groupes propulseurs, l'encombrement d'une telle installation est encore très important en raison du nombre élevé des composants nécessaires pour une seule colonne de stockage, nombre multiplié par le nombre de colonnes de stockage désirées pour l'ensemble de l'installation, ce qui implique également un volume conséquent et des problèmes importants de câblage entre les "panneaux" de composants obtenus pour les diverses colonnes de stockage.

C'est pourquoi la présente invention a pour but de réduire de façon très conséquente l'encombrement dans une installation du type mentionné plus haut, tout en accroissant fortement la capacité de stockage des cartouches et en réduisant le nombre des composants nécessaires.

Ce problème est résolu conformément à l'invention grâce au fait que les colonnes de stockage sont réparties uniformément sur le pourtour d'une chambre cylindrique de distribution alimentant en pression ou dépression le système tubulaire à partir du groupe propulseur.

Selon l'invention, les colonnes de stockage sont reliées à la chambre cylindrique de distribution par des répartiteurs d'air commandés. En outre, l'appareil comporte un sélecteur rotatif disposé entre le système tubulaire et la chambre cylindrique de distribution et destiné à établir une voie de liaison entre le système tubulaire et une colonne sélectionnée de stockage.

Conformément à l'invention, le système tubulaire est formé d'un tube unique vertical d'arrivée et de départ et le sélecteur rotatif est formé par un axe vertical de support pivotant par rapport à la chambre cylindrique de distribution et portant un tube coudé dont l'axe de l'ouverture supérieure coïncide avec l'axe de l'ouverture du tube d'arrivée/de départ et dont l'ouverture inférieure peut être alignée au-dessus de l'ouverture supérieure de l'une des colonnes.

Les avantages obtenus grâce à l'appareil de stockage conforme à l'invention sont importants : par suite de la disposition des colonnes de stockage sur le pourtour d'un cylindre à une distance réciproque réduite, on obtient, par rapport aux installations connues et pour une même hauteur de stockage des cartouches, une capacité de stockage au moins quadruple ou quintuple pour un encombrement très inférieur dans le plan horizontal. De plus, outre le fait d'employer un système tubulaire d'arrivée/de départ des cartouches, on n'utilise qu'un seul groupe propulseur pour le transfert des cartouches, ne provoquant aucune vibration dans les colonnes de stockage.

D'autres variantes de réalisation et caractéristiques de la présente invention ressortiront de la description qui va suivre et des dessins annexés.

La figure 1 montre une vue d'ensemble schématique de l'appareil de stockage/destockage conforme à l'invention.

La figure 1a montre schématiquement la partie supérieure de l'appareil de la figure 1 avec sa liaison au poste d'arrivée/de départ.

La figure 2 montre une vue plus détaillée du sélecteur rotatif du dispositif de la figure 1.

La figure 3 est une coupe du sélecteur rotatif de la figure 2, prise suivant la ligne III-III.

La figure 4 montre une coupe du dispositif de stockage proprement dit de l'appareil de la figure 1, prise suivant la ligne IV-IV.

La figure 5 représente une coupe axiale verticale d'une électrovanne unidirectionnelle de l'appareil de la figure 1.

La figure 6 représente une coupe axiale verticale d'une électrovanne bidirectionnelle de l'appareil de la figure 1.

La figure 7 représente de façon très schématique la liaison fonctionnelle entre la chambre cylindrique de distribution et le groupe propulseur de la figure 1.

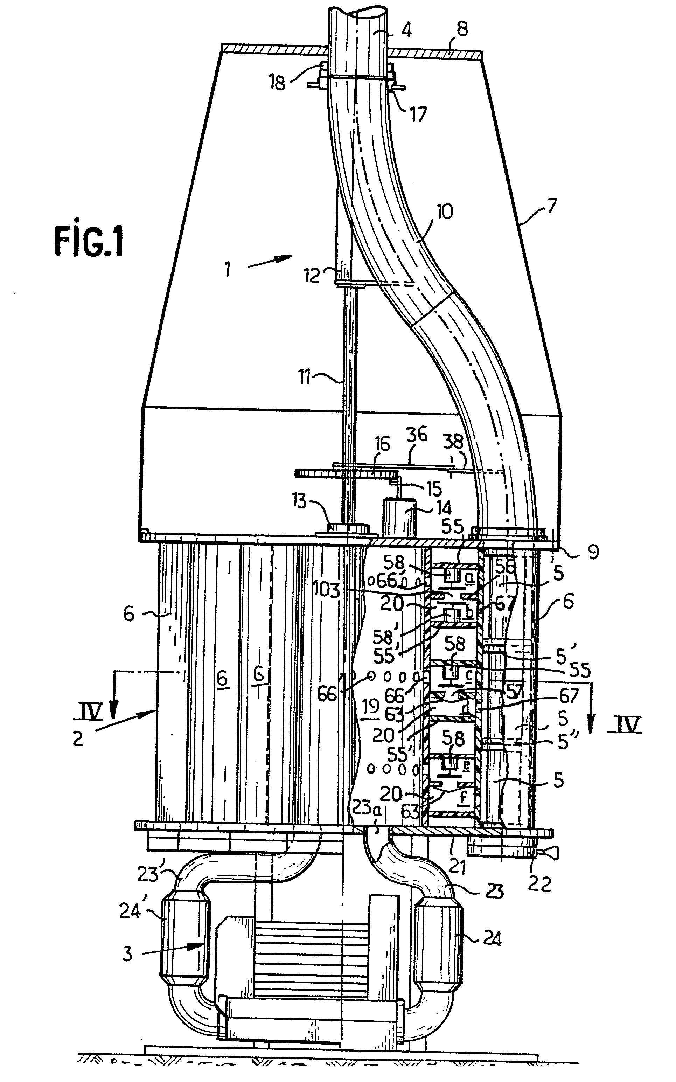

Sur la figure 1, on a représenté une vue générale schématique de l'appareil selon l'invention, qui se compose de trois dispositifs principaux, à savoir un sélecteur rotatif 1, un dispositif proprement dit de stockage 2 et un groupe propulseur 3 apte à établir une pression ou une dépression dans un système tubulaire, constitué par un tube 4 fixe, d'arrivée/de départ de cartouches, telle que 5 (figure 1a), munie de garnitures d'étanchéité et de frottement en feutre 5', 5" et destinée à être stockée ou destockée dans une colonne présélectionnée d'un ensemble de colonnes tubulaires parallèles et verticales 6, que comporte le dispositif de stockage 2. Le tube fixe 4 débouche par un diaphragme 5''' à fentes en étoile au pupitre de commande P.

Dans l'exemple de réalisation représenté, le sélecteur 1 est monté au-dessus du dispositif de stockage 2 coaxialement à ce dernier et est entouré par une structure rigide fixe 7, comportant une plaque supérieure 8 qui sert à maintenir en position centrée le tube 4, et qui est solidaire d'une plaque 9 constituant le couvercle plat supérieur du dispositif de stockage 2 et comportant des ouvertures 9' qui communiquent avec les colonnes de stockage 6 qui sont solidaires de ladite plaque 9.

Le sélecteur rotatif 1 se compose essentiellement d'un tube coudé 10, dont l'axe de l'ouverture supérieure coïncide avec l'axe vertical de la portion voisine du tube 4 et dont l'axe de la partie inférieure coïncide avec celui d'une colonne 6, lorsque ledit tube 10 est positionné de manière que son extrémité inférieure soit située au-dessus de l'ouverture d'une colonne 6. Le tube 10 est solidaire d'un axe de rotation vertical 11 par l'intermédiaire d'un flasque 12 soudé audit tube. L'axe 11 est monté sur la plaque 9 par un palier représenté schématiquement en 13 et il est entraîné en rotation par un moteur 14, dont l'extrémité de l'arbre 15 engrène avec un disque 16 solidaire de l'axe 11, d'une manière appropriée décrite plus loin. En outre, le tube 10 porte à son extrémité supérieure une collerette rapportée 17 qui s'applique, avec possibilité de rotation, contre un joint d'étanchéité 18 solidaire de la partie voisine du tube fixe 4.

Le dispositif de stockage 2 est formé d'une nourrice ou chambre cylindrique 19 de distribution d'une pression ou d'une dépression, centrée sur l'axe et reliée aux colonnes de stockage 6 par des répartiteurs d'air 20, reliant l'espace de la chambre 19 à l'espace des colonnes 6. En outre, le fond inférieur 21 de la chambre 19 comporte, à la partie inférieure des colonnes 6, des systèmes de fermeture 22 d'un type classique approprié, et est raccordé à deux tubulures 23 et 23' contenant chacune une électrovanne de commande 24 et 24' de type classique approprié raccordant le groupe propulseur 3 à la chambre 19 en y débouchant par les ouvertures 23a et 23'a ménagées dans le fond 21. Suivant une variante, les électrovannes 24 et 24' peuvent être montées directement sur les ouvertures 23a et 23'a. La tubulure 23 est reliée au côté refoulement du propulseur (soufflante) 3 et la tubulure 23' est reliée au
côté aspiration (de pression) du propulseur 3.

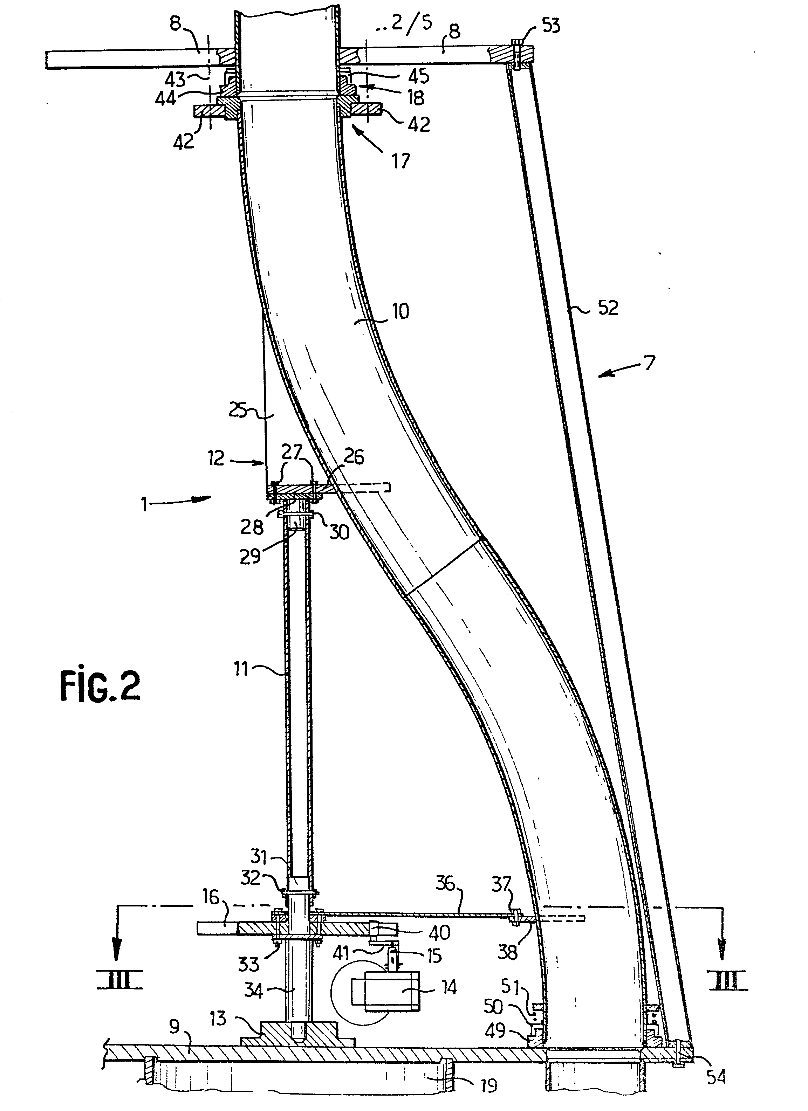

Sur la figure 2, qui est une vue de détail
à plus grande échelle du sélecteur rotatif 1, on a
utilisé les mêmes chiffres de référence que sur la
figure 1 pour des pièces identiques. Sur cette figure,
on voit que le flasque 12 se compose en réalité d'une
plaque triangulaire verticale 25 soudée au tube 10,
et d'une petite plaque horizontale 26 soudée à la plaque 25 et au tube 10. Cette plaque 26 est fixée par
exemple par des boutons 27 à une plaquette 28 solidaire
d'un embout 29 fixé par un boulon 30 dans l'extrémité
supérieure de l'axe 11, qui est de préférence creux.
La partie inférieure de cet axe 11 comporte également
un embout 31 fixé dans l'axe par un boulon 32 et solidaire du disque horizontal 16 au moyen de boulons 33,
qui relient également rigidement l'ensemble 11, 33 à
une partie inférieure rapportée 34 de l'axe. C'est cette
partie 34 qui est tourillonnée sur la plaque 9 par l'intermédiare du palier 13 non représenté en détail.

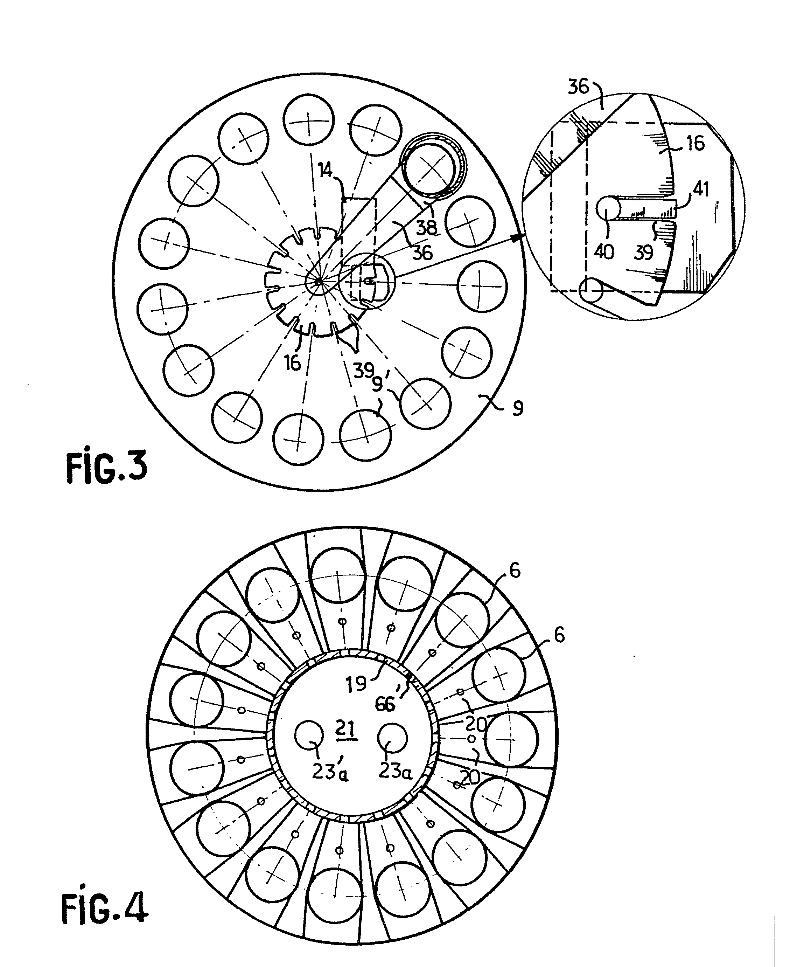

En outre, les boulons 33 relient rigidement
à l'axe 11, 34 une barre horizontale 36 raccordée à son
autre extrémité, par un boulon 37, à une pièce 38, formant collier, soudée au tube 10 (voir figure 3).

Le disque 16 est en réalité une plaque circulaire comportant des indentations 39 dans lesquelles
s'engage un galet 40 tourillonné sur un bras horizontal
41, solidaire de l'arbre 15 du moteur 14, représenté
de façon schématique, et excentré par rapport à cet
arbre 15. De préférence, il est prévu 15 indentations
correspondant à une répartition de 15 colonnes tubulaires
de stockage 6 sur le pourtour de la chambre cylindrique
de distribution 19, les rayons de répartition des colonnes
tubulaires passant par les axes desdites indentations
étant espacés uniformément angulairement d'un angle de 24° et l'ensemble 14, 15, 40, 41, 16 constituant un système d'entraînement du type en croix de Malte.

Par ailleurs, l'axe de rotation comporte un frein puissant de type usuel, non représenté sur la figure, permettant un arrêt précis du mouvement de rotation, dès que le tube 10 se situe au-dessus d'une colonne 6 présélectionnée.

Au niveau de la liaison entre le tube fixe 4 et l'extrémité supérieure du tube mobile 10, ce dernier porte une collerette rapportée 17, enserrée entre trois galets 42 représentés schématiquement, décalés angulairement de 120°, et dont les axes 42 sont solidaires de la plaque fixe supérieure 8. Ces galets coopèrent au centrage précis de la partie supérieure du tube mobile 10 en face du tube fixe 4, dont l'extrémité inférieure porte une garniture d'étanchéité 44 maintenue dans une bride 45, solidaire du tube fixe 4, et portant contre la collerette 17.

Au niveau de son extrémité inférieure, le tube mobile 10 comporte une garniture d'étanchéité 49 fixée dans une bride 50 solidaire du tube mobile 10. Sur la figure 2, on a représenté en pointillés un système incluant en outre un ressort 51 appliquant en permanence la garniture d'étanchéité 49 contre la plaque 9, garniture qui est constituée par une rondelle en feutre.

Enfin, on voit que le sélecteur rotatif 1 est entouré par la structure rigide fixe 7, dont les membrures 52 sont fixées aux plaques 8 et 9 par des fixations respectives 53 et 54, du type boulons par exemple.

Sur la figure 4, on a représenté une coupe prise suivant la ligne IV-IV de la figure 1, c'est-à-dire une coupe transversale du dispositif de stockage 2, sur laquelle on voit nettement la répartition des colonnes tubulaires de stockage 6 sur le pourtour de la chambre cylindrique de distribution 19, à laquelle elles sont reliées par des répartiteurs d'air commandés, formés par des électrovannes 58 représentées très schématiquement.

Chaque colonne tubulaire 6 communique (voir figure 1) avec la chambre cylindrique de distribution 19, au droit d'une rangée verticale de trous 66 par une colonne verticale de cellules a, b, c, d, e et f séparées entre elles par des parois 56 dont chacune est munie d'une ouverture 103 entre les cellules a et b, et 57 entre les cellules c-d, e-f. Les cellules b, d et f communiquent respectivement avec la colonne 6 par des ouvertures 67 situées au niveau des différentes cartouches 5, entre les feutres 5' et 5".

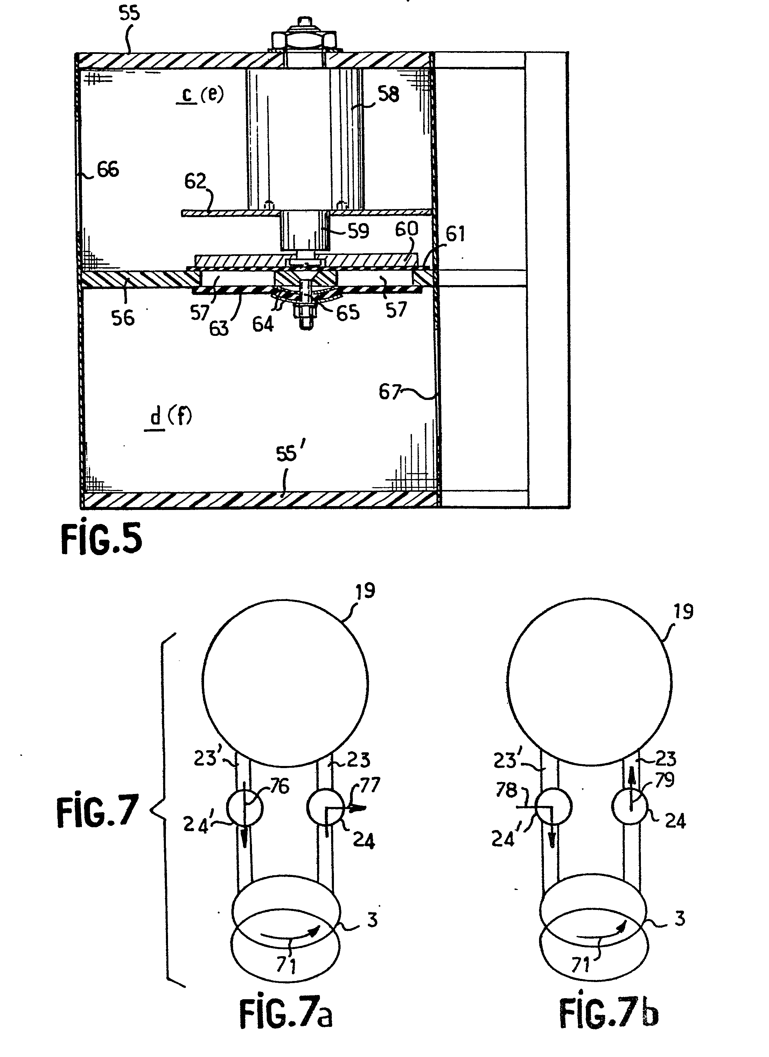

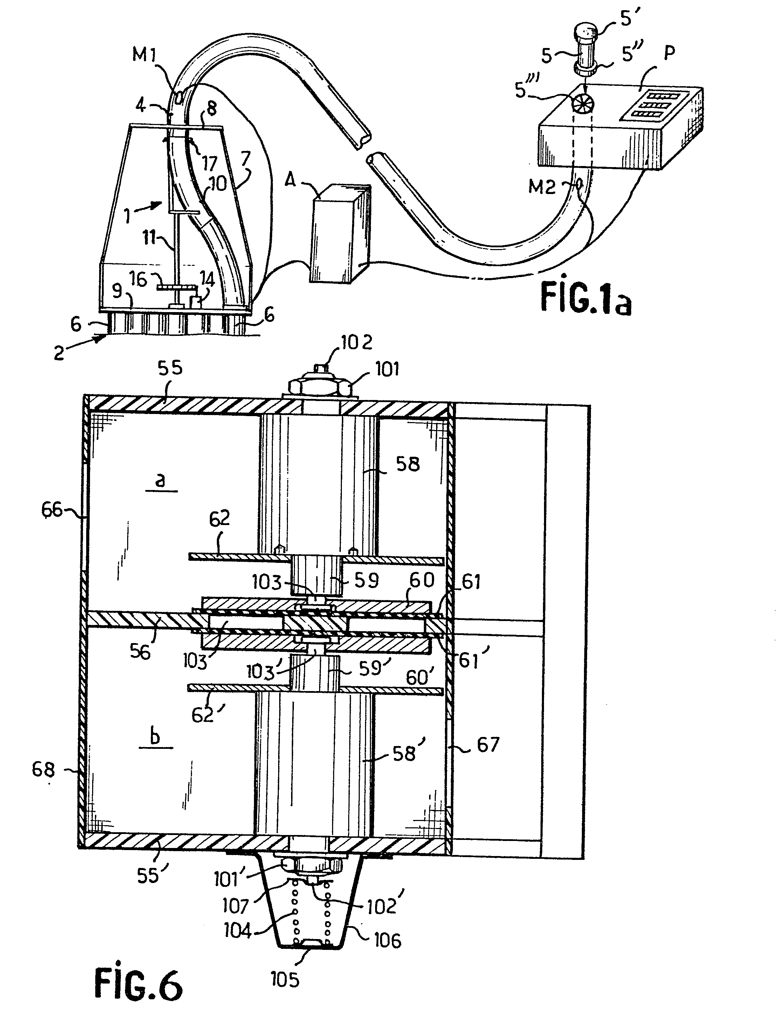

Comme indiqué précédemment, les électrovannes 58 sont soit d'un type unidirectionnel, comme représenté sur la figure 5, soit d'un type bidirectionnel, comme représenté sur la figure 6. Au niveau de la hauteur correspondant à une cartouche dans une colonne 6, c'est-à-dire dans les cellules c-d, e-f, il est prévu une électrovanne unidirectionnelle, à travers laquelle l'air ne peut circuler que de la chambre 19 en direction de la colonne 6, tandis qu'au sommet de chaque colonne 6, c'est-à-dire dans la cellule a-b, est montée une électrovanne bidirectionnelle, à travers laquelle l'air peut circuler dans le sens indiqué ci-dessus et dans le sens opposé.

Chaque électrovanne unidirectionnelle, telle que représentée dans la figure 5, est montée dans la cellule c-d limitée par les parois 55 et 55', avec une cloison intermédiaire 56 percée d'un orifice 57 ; la chambre de cellule supérieure c contient un électroaimant 58 dont le noyau 59 porte un plateau horizontal 60 formant clapet et pouvant obturer l'orifice 57 par le haut (cas de la figure). Ce plateau 60 comporte une garniture d'étanchéité 61. Par ailleurs, l'électroaimant comporte un flasque 62 réalisant un équilibrage de pression.

Au-dessous de l'orifice 57, dans la chambre de cellule d, est monté un clapet anti-retour formé par une rondelle élastique 63, qui est fixée en son centre par des rondelles rigides 64 et par un boulon 65 à la cloison 56.

La chambre de cellule supérieure c communique par une ouverture 66 avec l'ouverture 66' de la chambre cylindrique 19 et la chambre de cellule inférieure d communique avec l'espace intérieur de la colonne associée 6, par une ouverture 67.

Sur la figure 6, l'électrovanne bidirectionnelle se compose de deux parties sensiblement identiques et symétriques par rapport à la cloison intermédiaire 56 séparant entre elles les chambres de cellule a et b qui comportent respectivement l'ouverture 66 qui communique avec une ouverture 66' de la chambre cylindrique 19 et l'ouverture 67 qui communique avec la colonne associée 6.

Dans la chambre de cellule supérieure a, un électroaimant 58 est suspendu à la paroi 55 à l'aide de l'écrou 101 à travers lequel passe librement une tige de guidage 102 solidaire du noyau plongeur 59.

Ce dernier est pourvu d'un téton 103 emprisonné dans une ouverture correspondante d'une plateau 60 pourvu sur sa face inférieure d'une membrane élastique, par exemple en néoprène, 61, obturant l'ouverture 103 ménagée dans la cloison 56 séparant les deux chambres a et b.

Dans la chambre de cellule inférieure b est monté un électroaimant 58' disposé entre la plaque 62' et la paroi 55'.

L'électroaimant 58' est fixé à la paroi 55' par un écrou 101' traversé par une tige 102' solidaire du noyau 59' et refoulée vers la paroi intermédiaire 56 par un ressort 104 prenant appui d'une part contre le fond 105 d'un capot 106, et d'autre part contre un petit disque 107 coiffant l'extrémité de la tige 102'.

L'extrémité du noyau 59' opposée à la tige 102' est pourvue d'un téton 103' accroché au plateau 60' portant une membrane 61' identique à celle désignée par 61 et capable d'obturer, par le bas, dans le dessin, l'ouverture 103 ménagée dans la paroi intermédiaire séparant les chambres de cellule a et b.

Si par l'ouverture 66 une surpression est établie dans la chambre a par rapport à la chambre de cellule b, et si l'électroaimant 58 n'est pas excité, le diaphragme 61 reste appliqué contre l'ouverture 103 et l'obture, en sorte que les chambres de cellule a et b sont isolées l'une de l'autre. Par contre, si l'électroaimant 58 est excité, la membrane 61 dégage l'ouverture 103, et la surpression qui règne dans la chambre de cellule a est capable ou non de décoller la membrane 61 de la paroi intermédiaire 56 pour dégager l'ouverture 103, suivant que l'électroaimant est excité ou non, en tenant compte de l'action du ressort 104 qui a tendance à appliquer la membrane 61' contre la paroi intermédiaire 56 dans le sens de l'obturation de l'ouverture 103.

En somme, tout se passe comme si l'un des deux électroaimants 58, 58' sert de clapet anti-retour à l'autre quand une surpression règne dans l'une des deux chambres de cellule a ou b, en raison de la quasi-symétrie des moyens prévus dans ces dernières.

D'une manière générale, dans le cas d'un fonctionnement en pression ou dépression dans la chambre de cellule a, les deux électroaimants 58 et 58' sont excités simultanément. Dans le cas d'un fonctionnement en pression, c'est l'agencement prévu dans la chambre inférieure b qui joue le rôle de clapet anti-retour.

On va décrire maintenant le fonctionnement de l'appareil conforme à l'invention.

Lorsque l'utilisateur désire stocker une cartouche 5 dans une colonne de stockage 6 donnée, il commande cette opération à partir du pupitre P (figure la) pour, d'une part, faire pivoter le sélecteur rotatif en vue d'amener le tube 10 en face de l'ouverture supérieure de la colonne 6 sélectionnée, et pour, d'autre part, mettre en marche le groupe propulseur 3 et ouvrir l'électrovanne 24'.

On supposera que toutes les électrovannes sont fermées et que le moteur 14 et le propulseur ou soufflante 3 sont à l'arrêt.

On supposera, en outre, qu'une cartouche 5 est à introduire dans la colonne 6, en position inférieure.

A l'aide du pupitre de commande P, l'utilisateur commande l'installation en position de stockage dans la colonne 6.

Cette commande branche le moteur 14 dont l'arbre 15 entraîne le disque à indentation 16 et avec lui le tube 10 jusqu'à ce que ce dernier vienne se situer au-dessus de la colonne 6, position dans laquelle il est immobilisé éventuellement par le frein agissant sur l'arbre 15 du moteur 14. A l'instant où le tube 10 commence à se déplacer en direction de la colonne 6, les électrovannes 58 et 58' situées dans les cellules a et b sont excitées et découvrent l'ouverture 103 ménagée dans la paroi intermédiaire 56.

Presqu'en même temps que le tube 10 s'immobilise sur la colonne 6, la soufflante 3 est mise en route et l'électrovanne 24' est ouverte.

De ce fait, il s'établit, à partir de la soufflante 3, une dépression dans la conduite 23', dans la chambre cylindrique de distribution 19, dans la cellule a par l'ouverture 66 et 66', par l'ouverture 103 de la paroi intermédiaire 56, par l'ouverture 67 et la colonne 6 et par le tube 10 et son prolongement 4 jusqu'au niveau du diaphragme 5'''.

Une cartouche 5 qui est introduite à travers le volet 5''' sera donc aspirée et passera par la conduite 4, parle tube 10 et sera introduite dans la colonne 6.

Lorsque cette cartouche 5 passe devant le micro-interrupteur M1 prévu dans la conduite 4, ce dernier coupe le courant pour les électrovannes 58, 58', pour l'électrovanne 24' et pour la soufflante, en sorte que la cartouche 5 chute par gravité vers la colonne 6 en étant freinée par l'effet de dash-pot ou de fuite d'air autour de ses garnitures de feutre 5' et 5".

Les mêmes opérations ont lieu pour le stockage d'une cartouche dans une autre colonne, ou d'une cartouche dans la même colonne 6, mais en position intermédiaire ou supérieure, si une cartouche ou deux cartouches sont déjà stockées dans celle-ci.

Pour le destockage, on supposera que trois cartouches ont été stockées dans la colonne 6 au-dessus de laquelle ne se trouve plus le tube 10, que le moteur 14 et la soufflante 3 sont à l'arrêt et que toutes les électrovannes sont fermées.

L'utilisateur commande au pupitre P le destockage des cartouches de la colonne 6.

Tout d'abord, le moteur 14 est branché sur son alimentation et son arbre 15 commande, par l'intermédiaire du disque à indentations 16, la rotation du tube 10 qui vient s'immobiliser au-dessus de la colonne 6. En même temps, les deux électrovannes 58 et 58' sont excitées et se détachent de la paroi intermédiaire 56 en dégageant l'ouverture 103.

Simultanément, la soufflante se met en route et l'électrovanne s'ouvre ; l'air comprimé est refoulé par la conduite 23 dans la chambre cylindrique de distribution 19, d'où cet air passe par l'ouverture 66'-66 dans les cellules a et b, et l'air comprimé passant par l'ouverture 67 agit en dessous de la rondelle en feutre 5', ce qui provoque le soulèvement de la cartouche et son expulsion par le tube 10, le conduit 4 et par le diaphragme 5''', cette expulsion devenant plus vigoureuse dès que l'air comprimé passant par l'ouverture 67 commence à agir sur le fond de la cartouche 5. Lorsque cette dernière passe par le micro-interrupteur M2 ou peu de temps après, l'alimentation de la soufflante est arrêtée, de même que celle des électrovannes 24 et 58, 58' qui se ferment.

Si ensuite l'utilisateur souhaite destocker la cartouche 5 qui est en position intermédiaire dans la colonne 6, il opère une commande appropriée au pupitre P qui provoque l'alimentation en courant de la soufflante 3, de l'électrovanne 24 et de l'électrovanne 58 située dans la cellule c. L'air comprimé, provenant de la conduite 23 et passant par la chambre cylindrique 19, passe dans la cellule c et dans la cellule d, en décollant la membrane 63 et agit, comme précédemment, sur la cartouche à destocker. Puis, comme précédemment, à la sortie de la cartouche, la soufflante s'arrête et l'électrovanne 24 et l'électrovanne 58 de la cellule c se ferment.

Pour destocker la cartouche inférieure, les mêmes opérations sont commandées à l'aide de la soufflante 3, de l'électrovanne 24 et de la seule électrovanne 58 située dans la cellule e.

Il convient de noter que les électrovannes 58 et 58' situées dans les cellules a et b servent soit au stockage de toutes les cartouches, soit au seul destockage de la cartouche supérieure, alors que les électrovannes 58 situées dans les cellules c et e servent uniquement au destockage des cartouches situées à leurs niveaux respectifs.

En ce qui concerne les clapets 63 prévus dans les cellules d et f, elles servent à empêcher le décollement inopportun du clapet 60 lorsque les cellules c et e sont en dépression et les cellules d et f à la pression atmosphérique, ce qui conduirait à une interruption du fonctionnement.

Enfin, la boîte désignée par la référence A dans la figure 1a représente l'armoire des commandes des alimentations du moteur 14, de la soufflante 3 et des diverses électrovannes à partir du pupitre P, ces commandes n'étant pas représentées, étant donné qu'elles peuvent être réalisées de diverses manières en fonction des séquences des opérations qui ont été décrites ci-dessus ; de même, les circuits d'alimentation en courant électrique n'ont pas été représentés, car ils peuvent être réalisés de toute manière voulue.

Pour être complet, on va encore décrire, en référence à la figure 7, la liaison fonctionnelle entre le groupe propulseur 3 et la chambre cylindrique 19. La figure 7 est composée de la figure 7a illustrant le cas où l'on veut stocker une cartouche et de la figure 7b illustrant le cas où l'on veut destocker une cartouche.

Le groupe propulseur 3 fonctionne en refoulant l'air dans le même sens, repéré par la flèche 71. Il est relié à la chambre cylindrique 19 par deux tubes 72, 73 dans lesquels sont montées des électrovannes 74 et 75 représentées schématiquement.

Dans le cas du stockage d'une cartouche, le groupe propulseur 3 doit créer une dépression dans la chambre cylindrique 19, et donc les électrovannes 74 et 75 sont commandées de manière à laisser circuler l'air conformément aux flèches 76 et 77, c'est-à-dire que l'air est aspiré depuis la chambre cylindrique 19 pour ressortir au niveau de l'électrovanne 75, selon la flèche 77.

Dans le cas du destockage d'une cartouche, le groupe propulseur 3 doit créer une pression dans la chambre cylindrique 19, c'est-à-dire refouler l'air vers cette dernière, et donc les électrovannes 74 et 75 sont commandées de manière à laisser circuler l'air conformément aux flèches 78 et 79, c'est-à-dire à partir d'une prise d'air (flèche 78) au niveau de l'électrovanne 74 pour être refoulé dans la chambre cylindrique 19 en direction des cellules a, c et e.

REVENDICATIONS DE BREVETS

1. Appareil de stockage et de déstockage automatiques d'objets divers, par exemple de numéraires permettant un transfert de fonds entre un poste d'entrée/sortie et une chambre de stockage par l'intermédiaire de cartouches mobiles circulant, sous l'action d'une pression ou d'une dépression fournie par une soufflante, dans un système tubulaire relié à des colonnes de stockage, caractérisé par le fait que les colonnes de stockage sont fixes et sont réparties uniformément sur le pourtour d'une chambre cylindrique de distribution alimentant en pression ou dépression le système tubulaire à partir du groupe propulseur.

2. Appareil selon la revendication 1, caractérisé par le fait que les colonnes de stockage sont reliées à la chambre cylindrique de répartition par des répartiteurs d'air commandés.

3. Appareil selon l'une des revendications 1 ou 2, caractérisé par le fait qu'il comporte un sélecteur rotatif disposé entre le système tubulaire et la chambre cylindrique de répartition et destiné à établir une voie de liaison entre le système tubulaire et une colonne de stockage sélectionnée.

4. Appareil selon la revendication 3, caractérisé par le fait que le système tubulaire est formé d'un tube unique vertical d'arrivée/de départ et que le sélecteur rotatif est formé par un axe vertical de support pivotant sur la nourrice et portant un tube coudé dont l'axe de l'ouverture supérieure coïncide avec l'axe de l'ouverture du tube d'arrivée/de départ et dont l'ouverture inférieure peut être alignée au dessus de l'ouverture supérieure de l'une des colonnes.

5. Appareil selon la revendication 4, caractérisé par le fait que le chassis de support du sélecteur rotatif est entraîné selon un mouvement d'avance pas à pas, dont le pas d'avance angulaire correspond à la distance angulaire entre deux colonnes de stockage successives.

6. Appareil selon la revendication 5, caractérisé par le fait que le mouvement d'avance du sélecteur rotatif est réalisé au moyen d'un système à croix de Malte, par un moteur solidaire de la chambre cylindrique de répartition et dont l'arbre porte un galet fou monté excentré et s'engageant dans les encoches de la croix de Malte.

7. Appareil selon la revendication 6, caractérisé par le fait que le pas d'avance est de 24° et qu'il est prévu 15 colonnes de stockage.

8. Appareil selon l'une quelconque des revendications 1 à 7, caractérisé par le fait que les répartiteurs d'air commandés sont des électrovannes.

9. Appareil selon la revendication 8, dans lequel le nombre des électrovannes pour chaque colonne est égal au nombre de cartouches pouvant être reçues par une colonne de stockage, caractérisé par le fait que l'électrovanne située au niveau supérieur de chaque colonne a une commande bidirectionnelle et que les autres électrovannes sont à commande unidirectionnelle.

10. Appareil selon la revendication 9, caractérisé par le fait que chaque électrovanne à commande unidirectionnelle est associée à deux chambres de cellules superposées séparées par une cloison intermédiaire, dont la chambre supérieure est réliée à la chambre cylindrique de répartition en pression/dépression et contient un électroaimant dont le noyau porte un plateau horizontal apte à obturer par le haut un orifice de passage situé dans ladite cloison intermédiaire et communiquant avec la chambre de cellule inférieure reliée à la colonne de stockage, ladite cloison intermédiaire portant en outre un clapet anti-retour obturant l'orifice de passage du côté de la cloison opposé audit plateau.

11. Appareil selon la revendication 10, caractérisé par le fait que l'électroaimant porte un flasque d'équilibrage de pression et que le plateau formant clapet est muni d'une garniture d'étanchéité sur sa face s'appliquant contre la cloison.

12. Appareil selon la revendication 10, caractérisé par le fait que le clapet anti-retour est formé par un flasque élastique fixé en son centre par des rondelles et un boulon à la cloison séparant les deux chambres.

13. Appareil selon la revendication 12, caractérisé par le fait que l'électrovanne à commande bidirectionnelle est formée d'une électrovanne unidirectionnelle double ne comportant qu'un seul clapet anti-retour.

14. Appareil selon l'une quelconque des revendications 1 à 13, caractérisé par le fait que la liaison entre la chambre cylindrique de répartition et la soufflante est formée par deux tubes, dans lesquels sont montées des électrovannes de commande commutables pour la mise en pression ou en dépression de ladite chambre, avec prise d'air extérieur et/ou sortie d'air vers l'extérieur.

15. Appareil selon l'une quelconque des revendications 1 à 14, caractérisé par le fait qu'il est prévu des garnitures d'étanchéité, notamment formées par un feutre, au niveau des liaisons entre le tube d'arrivée/de départ et le tube coudé du sélecteur et entre ce dernier et la plaque horizontale supérieure de ladite chambre dont sont solidaires les colonnes de stockage.

16. Appareil selon l'une quelconque des revendications 1 à 15, caractérisé par le fait que la plaque supérieure de ladite chambre porte des membrures latérales en forme de tiges situées dans des plans verticaux et reliant une plaque supérieure entourant et/ou solidaire du tube d'arrivée/de départ et à laquelle est fixée, par exemple par des boulons, une plaque annulaire entourant le tube coudé en position centrée sur l'axe de rotation du sélecteur.

17. Appareil selon l'une quelconque des revendications 1 à 16, caractérisé par le fait qu'il est prévu un système de centrage précis de l'extrémité supérieure du tube coudé par rapport au système tubulaire fixe, comportant trois galets écartés angulairement à 120° et fixés sur une structure solidaire du tube d'arrivée/de départ fixe et de la plaque supérieure de la nourrice.

FİG.1

0057133

FIG.2

0057133

FIG.3

FIG.4

FIG.5

FIG.7

FIG.7a          FIG.7b

FIG.1a

FIG.6

**0057133**

Office européen
des brevets

**RAPPORT DE RECHERCHE EUROPEENNE**

Numéro de la demande

EP 82 40 0104

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | <u>FR - A - 2 428 597</u> (TELEDOC)<br><br>* revendication 1; figures 1,4 *<br><br>--- | 1 | B 65 G 51/32<br>B 65 G 51/34 |
| A | <u>DE - B - 1 259 792</u> (LORENZ)<br><br>* en entier *<br><br>--- | 1 | |
| A | <u>FR - A - 2 125 231</u> (NEU)<br><br>* page 1, lignes 29-38; figures 1,2 *<br><br>--- | 1,3,4, 15 | **DOMAINES TECHNIQUES RECHERCHES (Int. Cl. ³)**<br><br>B 65 G |
| A | <u>US - A - 4 027 833</u> (BERNARD) | | |
| A | <u>DE - A - 2 131 052</u> (SIEMAG)<br><br>--------- | | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| La Haye | 22-04-1982 | OSTIJN |

OEB Form 1503.1  06.78